# EUROPÄISCHE PATENTSCHRIFT

(11) **EP 0 377 818 B1**
(45) Veröffentlichungstag und Bekanntmachung des Hinweises auf die Patenterteilung: **28.12.1994**
(21) Anmeldenummer: 89122114.5
(22) Anmeldetag: 30.11.1989
(51) Int. Cl.: G01N 13/00

(54) **Verfahren zur Messung der Benetzungskraft zwischen Flüssigkeit und Festkörper**
Method of measuring the wetting power between fluid and solid body
Méthode de mesure du pouvoir de mouillage entre liquide et corps solide

(30) Priorität: 13.01.1989 DE 3900845
(43) Veröffentlichungstag der Anmeldung: 18.07.1990
(73) Patentinhaber: Schmitt-Thomas, Karlheinz G., Prof. Dr.-Ing., D-80639 München (DE)
(72) Erfinder: Schmitt-Thomas, Karlheinz G., Prof. Dr.-Ing., D-80639 München (DE)
(74) Vertreter: Patentanwälte Zellentin & Partner

(56) Entgegenhaltungen:
- DE-A- 3 714 012
- US-A- 4 674 322
- US-A- 4 783 987
- THE GEC JOURNAL OF RESEARCH (INCORPORATING THE MARCONI REVIEW), Band 4, Nr. 4,1986, Seiten 270-274; I.A. GUNTER: "Solderability testing of state-of-the-art electronic components and substrates"

## Beschreibung

Die Erfindung betrifft ein Verfahren zur Messung der Benetzung zwischen Flüssigkeit und Festkörper.

Für die Eignung von Werkstoffkombinationen, insbesondere für die Ausbildung einer Füge- oder Haftschicht zwischen verschiedenen Werkstoffen spielt die Benetzungskraft zwischen einem flüssigen Medium und einem Festkörpermedium eine maßgebende Rolle. Zu den Anwendungsfällen gehören z.B. das Einbringen von Faserverstärkungen bei der Herstellung von Kompositwerkstoffen. Auch bei Schichtverbunden ist für die Qualität der Verbindung vielfach die Benetzungsfähigkeit zwischen den einzelnen Fasern von Bedeutung. Eine herausragende Rolle spielt die Messung der Benetzungsfähigkeit bei der Beurteilung der Lötbarkeit, insbesondere im Bereich der Elektronik und Mikroelektronik. Ein Verfahren zur Beurteilung der Lötbarkeit mittels einer Benetzungskraft - Messung ist aus den Artikel: "Solderability testing of state-of-the- art electronic components and substrates"; GEO Journal of Research; Band 4, Nr. 4; 1986; Seiten 270-274; I.A. Gunter, bekannt.

Die Zuverlässigkeit von Bauteilen und Komponenten der Elektrotechnik und der Elektronik ist wesentlich von der einwandfreien Ausführung der Lötverbindung insbesondere zwischen den Einzelbausteinen und der Leiterplatte abhängig. In der Großserienfertigung ist das wichtigste Verfahren für die Herstellung elektrisch leitender Verbindungen das Weichlöten. In modernen Produktionsprozessen nehmen dabei solche Lötverfahren eine bedeutsame Stellung ein, die einen hohen Automatisierungsgrad zulassen. Es sind dies Verfahren wie das Wellenlöten, Schlepplöten, Reflow-Löten und davon abgeleitete Prozesse oder Prozeßkombinationen.

Um eine gleichbleibende kontrollierbare Qualität der Produkte und damit die erforderliche Zuverlässigkeit zu gewährleisten, ist es erforderlich, die Lötbarkeit reproduzierbar quantitativ zu erfassen. Die Lötbarkeit steht unmittelbar im Zusammenhang mit der Benetzbarkeit zwischen Lot und Substrat. Die Benetzungsreaktion ist eine Reaktion an der 3-Phasengrenzfläche zwischen flüssigem Lot, festem Substrat und dem umgebenden Medium. Somit ist die Benetzbarkeit abhängig von Art und Oberflächenzustand des Substratwerkstoffs, Temperatur, Zusammensetzung und Zustand des Lotes sowie vom Flußmittel. Die Prüfung der Benetzungsfähigkeit wird nach verschiedenen Verfahren durchgeführt. Als wichtigen Methoden seien genannt:
1. optische Prüfung
2. Ausbreitungsmessung nach DIN 8516
3. Hubtauchprüfung nach DIN 32506, Teil 2, 3
4. Benetzungskraftmessung nach DIN 32506, Teil 4
5. Lotkugelprüfung nach DIN IEC 68, Teil 2-20
6. Drehtauchtest nach DIN 40803, Teil 1
7. Steighöhentest

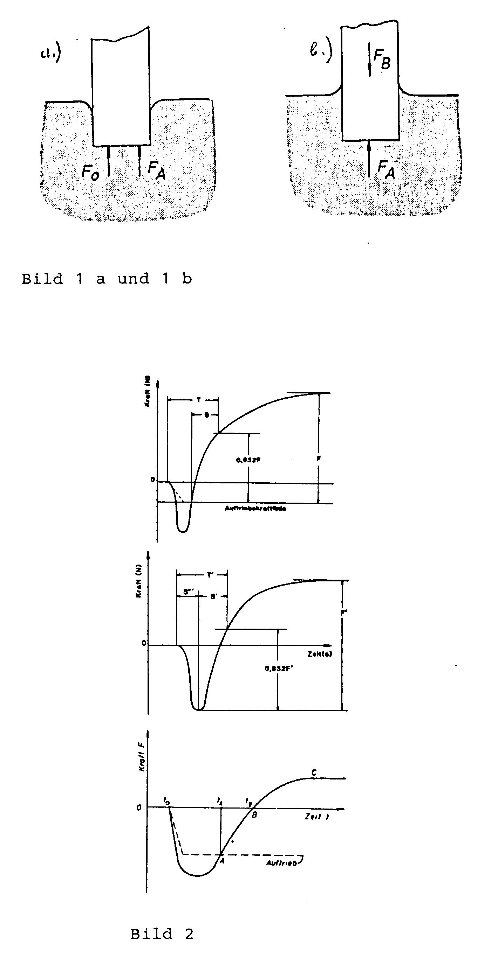

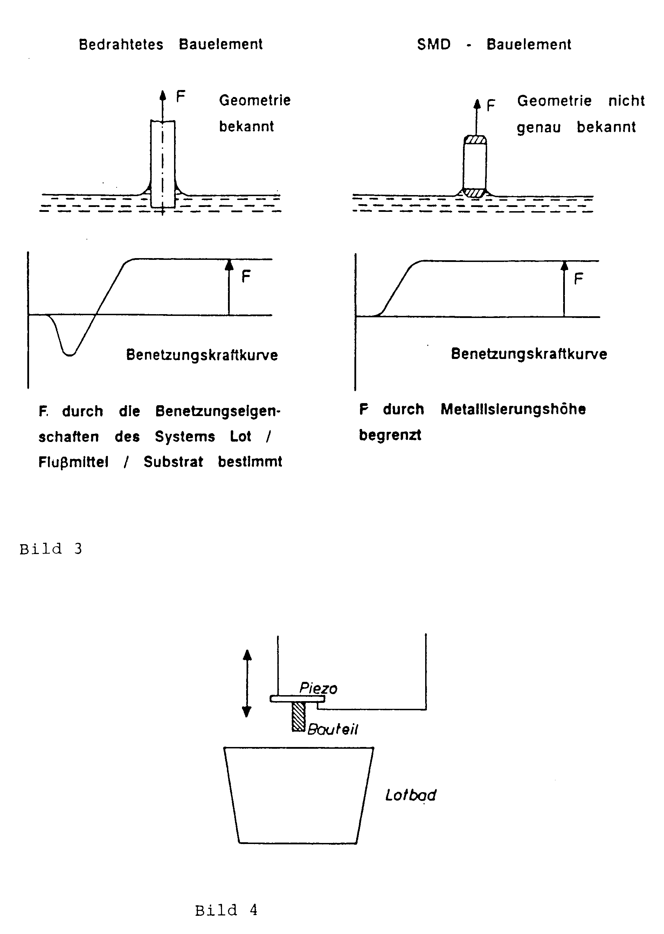

Die Messung der Kräfte in Abhängigkeit von der Zeit beim Eintauchen eines Prüfkörpers in das Lotbad spielt für die Beurteilung der Lötbarkeit eine herausragende Rolle, da mit Hilfe dieser Methode eine Reihe von reproduzierbaren und aussagekräftigen Zahlenwerten gewonnen werden können. Der Verlauf der an einer Benetzungswaage zu messenden Kräfte über der Zeit während des Eintauchvorgangs ergibt sich daraus, daß ein zu belotender Testkörper, der in das Lot getaucht wird, zunächst die Oberflächenspannung sowie die Reibungskräfte aufgrund der Zähigkeit des Lots und beim Durchstoßen der Oxidhaut überwinden muß (Bild 1 a). Bei einsetzendem Benetzungsvorgang wird die Benetzungskraft wirksam, die das Lot an der Oberfläche hochsteigen läßt bzw. den Testkörper durch die Benetzungskräfte in das Lot zieht. Entgegengerichtet zur Benetzungskraft ist schließlich noch der Auftrieb am Testkörper wirksam (Bild 1 b). Der Verlauf der Kräfte über der Zeit bei einem Eintauchvorgang eines Prüflings in das Lotbad ergibt den Verlauf einer Benetzungskraftkurve, die in einer reproduzierbaren Weise eine quantitative Darstellung der Lötbarkeit zuläßt. Die mit Hilfe der Benetzungswaage aufgenommenen Kraft-Zeit-Diagramme spiegeln den Ablauf der beschriebenen Vorgänge beim Eintauchen wieder (Bild 3). Die Benetzungskraftmessungen mit Hilfe der Benetzungswaage haben Variationen erfahren, insbesondere zur präziseren Erfassung des Beginns der Benetzung und/oder des Abreissens des Lotes bei der Entfernung des Prüflings aus dem Lotbad. Auch Abweichungen vom senkrechten Eintauchen durch Anwendung verschiedener Eintauchwinkel sind vorgenommen worden.

Die Variationen in der Durchführung der Benetzungskraftmessungen mit Hilfe der Benetzungswaage stehen zum Teil im Zusammenhang mit den Schwierigkeiten, die sich bei der Feststellung der Lötbarkeit an miniaturisierten Bauelementen, insbesondere an Bauelementen der SMD-Technik, ergeben. Wegen der kleinen Ausdehnung der zu metallisierenden Flächen kann sich bei SMD-Bauteilen kein vollständiger Lotmeniskus mehr ausbilden. Beim Eintauchen von Bauteilen wie SMD's wird somit das Aufsteigen des Meniskus beim Eintauchen durch die Höhe der vorhandenen Metallisierung begrenzt und ist damit nicht mehr kennzeichnend für die Benetzungskraft. In den Benetzungskraftkurven äußert sich dies darin, daß bei geometrisch gleichen Bauteilen die maximale Benetzungskraft unabhängig von den Versuchsparametern immer in das gleiche Niveau einläuft. Es ist somit unter diesen Voraussetzungen lediglich noch Benetzung oder Nichtbenetzung zu unterscheiden, während die quantitative Messung der Benetzungskräfte nicht in der Art wie bei üblichen Benetzungskraftkurven an Bauteilen ohne geometrisch bedingte Begrenzung des Meniskus erfolgen kann (Bild 3).

Aufgabe der Erfindung ist es, ein Verfahren zur Messung der Benetzungskraft zwischen Flüssigkeit und Festkörper zu schaffen, die eine quantitative Messung der Benetzungskräfte ermöglicht.

Diese Aufgabe wird durch ein Verfahren mit den kennzeichnenden Merkmalen des Anspruchs 1 gelöst.

Zweckmäßige Weiterbildungen des Verfahrens sind in den Unteransprüchen gekennzeichnet.

Das erfindungsgemäße Verfahren geht davon aus, daß die Benetzung eine Folge der treibenden Kräfte der Oberflächendiffusion ist, d.h., daß sie dem Bestreben der Oberfläche folgt, sich so mit Atomen eines umgebenden Mediums abzusättigen, daß der Zustand minimaler Energie eintritt. Im Gegensatz zur Benetzungswaage, die bei diesem Vorgang die statischen Kräfte über der Zeit mißt, wird beim erfindungsgemäßen Verfahren die Kraftwirkung bei einem dynamischen Vorgang - wie dies eine Schwingung darstellt - erfaßt. Durch die Wirkung der Kräfte beim Benetzungsvorgang erfährt ein schwingendes System, in das der Testkörper einbezogen ist, eine Veränderung, z.B. durch Dämpfung oder Frequenzverschiebung als Folge der Energieübertragung zwischen Festkörper und Flüssigkeit, die dazu führt, daß in die Schwingung einer Komponente je nach den Benetzungskräften das gesamte System Flüssigkeit/Festkörper einbezogen wird. Die Messung von Dämpfungswirkungen oder Frequenzverschiebungen ist nicht durch die Ausdehnung der Metallisierungsschicht begrenzt, läßt sich also auch bei sehr kleinen Metallisierungsflächen durchführen. Hinzu kommt, daß die Verstimmung eines schwingenden Systems wesentlich feinfühliger auf die Einwirkung äußerer Kräfte reagiert als dies bei statischen Messungen der Fall ist.

Zur Durchführung der Messung nach dem erfindungsgemäßen Verfahren wird das schwingungsfähige System mit dem Testkörper bevorzugt in Longitutinal- oder Torsionsschwingungen versetzt, auch Transversalschwingungen und Oberflächenschwingungen sind sinnvoll anwendbar. Als Frequenz kann eine einzige Frequenz gewählt werden, z.B. die Resonanzfrequenz des Systems (Aufnehmer und Probe). Es kann aber auch zur Anregung eine Durchstimmung aller Frequenzen innerhalb eines bestimmten Frequenzbandes erfolgen. Im Falle der Durchstimmung kann der Einfluß der Benetzungskräfte in Abhängigkeit von der Lage der Anregungsfrequenz betrachtet werden. Zusätzlich zur Messung der Dämpfung und/oder Verschiebung der Frequenz oder der Frequenzen kann bei der Messung auch die über die Grenzfläche flüssig/fest übertragene Schwingungsenergie herangezogen werden, die ebenfalls eine Aussage über die Benetzungskräfte zuläßt. Die Messung der Energie über die Übertragung durch die Grenzfläche flüssig/fest kann auch für sich allein betrachtet werden. Für die Messung der Energieübertragung ist zusätzlich zum anregenden System ein Schallaufnehnmer erforderlich, der an einer anderen Stelle (im Bad oder im Festkörper) die durchgeleitete Energie aufnimmt.

Um die Benetzungskräfte und deren Einfluß auf den schwingenden Testkörper zu messen, kann die Amplitude so gewählt werden,-daß im Minimum der Welle (tiefster Punkt) der Körper das Bad gerade berührt, so daß auf dem Weg zum Maximum das Bad durch die Benetzungskräfte mit hochgezogen wird. Durch Veränderung der Amplitudenhöhe kann ein Maximalausschlag bis zum Abreißen der Flüssigkeit bestimmt werden. Es kann jedoch auch bei voll eingetauchtem Körper die Dämpfung der Schwingung infolge der Kräfte zwischen Bad und Festkörperoberfläche (Benetzungskräfte) gemessen werden. Während des Versuches läßt sich sowohl die Amplitude wie auch die Frequenz konstant halten oder variieren.

Ein Ausführungsbeispiel zeigt die Beeinflussung der Frequenz durch die Benetzungkräfte. Das zu prüfende Bauelement wird mit einem Piezo-Blättchen fest verbunden, z. B. durch Kleben. Durch Anlegen einer Wechselspannung wird das System Piezo - Probe zu Schwingungen, z.B. sinusförmigen Schwingungen, angereget, so daß das Bauelement parallel zu seiner Längsachse schwingt (Bild 4). Die Frequenz wird in diesem Fall so gewählt, daß keine Eigenschwingungen der Probe angeregt werden. Wird nun das schwingende System in das Lotbad getaucht, so treten aufgrund der Benetzung zwei Effekte auf:
1. Die Eigenfrequenz des Systems wird durch die Benetzungskräfte verschoben.
2. Die Schwingung wird abhängig vom Grad der Benetzung gedämpft.

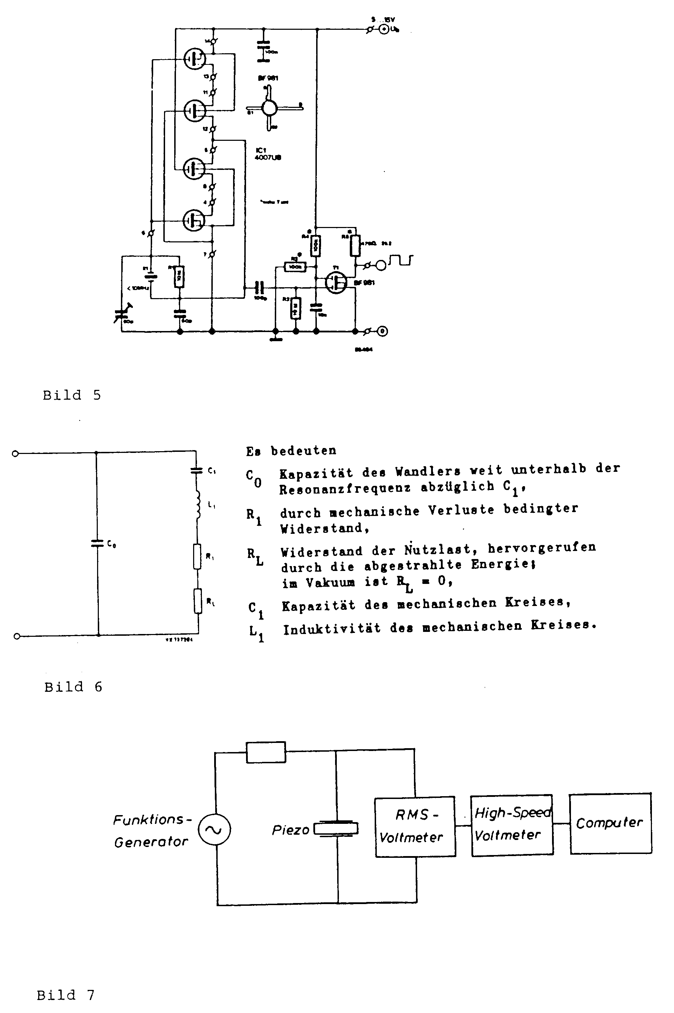

Zur Messung der Änderung der Resonanzfrequenz kann z.B. der Schwingquarz als frequenzbestimmendes Glied in einer Oszillatorschaltung verwendet werden (Bild 5). Die Frequenzänderung in Abhängigkeit von der Zeit gibt dann den Verlauf der Benetzung wieder. Die durch die Benetzung auftretende Dämpfung bewirkt eine Erhöhung des Widerstands R_{L} im Ersatzschaltbild des Schwingquarzes und ist daher über den Scheinleitwert in Resonanz meßbar (Bild 6).

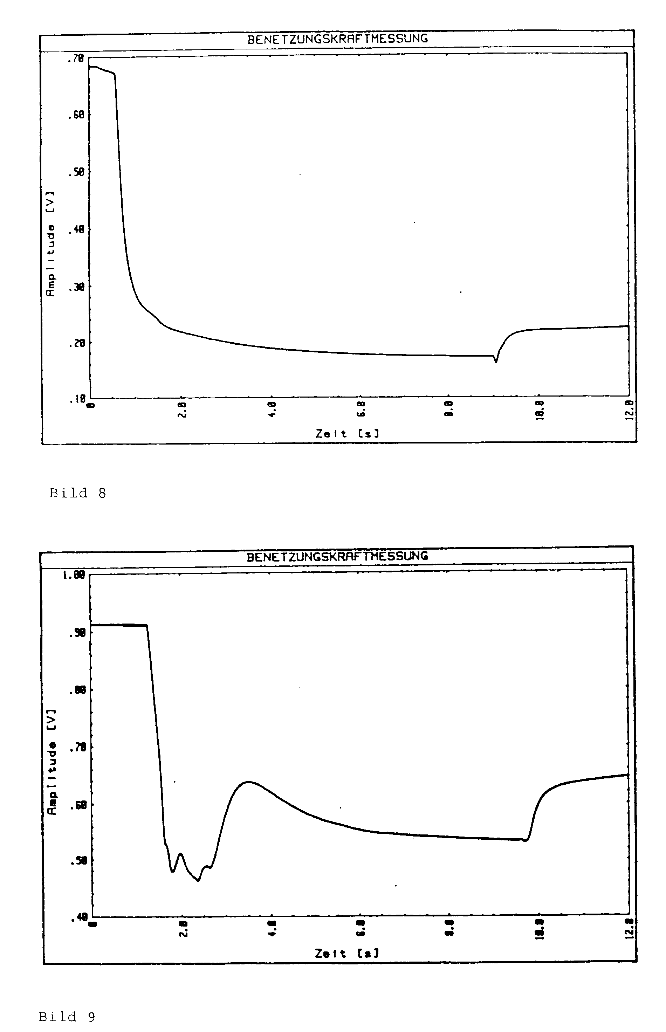

Für die Durchführung von Versuchen wurden SMD-Widerstände vom Typ MELF (Metal Electrode Face Bonding) mit den Abmessungen 5,9 x 2,2 mm sowie eine Piezoxid-Summermembran von Valvo (Durchmesser 12,5 mm, Resonanzfrequenz 12 kH, Kapazität 6 nF) verwendet. Gemessen wird der Scheinleitwert des Piezos. Zur Prüfung der Benetzbarkeit wird der Funktionsgenerator auf diejenige Frequenz eingestellt, bei der der Scheinleitwert sein Maximum aufweist. Die Messanordnung wird in Bild 7 wiedergegeben. Wird die Probe in ein Lotbad getaucht, so ändert sich der Scheinleitwert bei konstanter Frequenz des Funktionsgenerators aufgrund von:
1. Die Eigenfrequenz des Piezos wird durch die auftretenden zeitabhängigen Kräfte verschoben, so daß das Maximum des Scheinleitwertes bei einer anderen als der eingestellten Frequenz liegt.
2. Das System wird durch die Benetzung mit Lot gedämpft, was eine Verringerung des Scheinleitwertes zur Folge hat.

Auszuschließen oder zu kompensieren sind Einflüsse auf die Frequenz durch die Temperaturschwankungen. Zur Darstellung des Verlaufes des Scheinleitwertes bei Benetzung und Nichtbenetzung dienen die mit der Versuchsanordnung aufgenommenen Kurven (Bild 8 und Bild 9). In Bild 9 ist deutlich zu sehen, wie durch die Benetzung zusätzliche Kräfte im Kurvenverlauf erscheinen, ebenso wie sich im Verlauf der Kurve die durch die Benetzung bewirkte Dämpfung manifestiert.

Aus der Interpretation des Verlaufs des Scheinleitwertes (Bild 9) können differenzierte Aussagen über die Benetzungskraft und damit die Lötfähigkeit von Bauelementen entnommen werden. Die Aussagen gehen dabei weit über die Möglichkeiten anderer bisher bekannter Benetzungstests hinaus.

## Patentansprüche

1. Verfahren zur Messung der Benetzungskraft zwischen einer Flüssigkeit und einem miniaturisierten Festkörper (Drittkörper), **dadurch gekennzeichnet,** daß man den Festkörper mit einem schwingenden System verbindet und die beim Eintauchen des Festkörpers in die Flüssigkeit in Abhängigkeit von der Benetzungskraft zwischen der Oberfläche des Festkörpers und der Flüssigkeit auftretenden Änderungen des Schwingungsverhaltens bestimmt, und daß die Veränderung des Schwingungsverhaltens bzw. die Übertragung der Schwingungsenergie zwischen Festkörper und Flüssigkeit zur Kennzeichnung der Benetzungskraft herangezogen wird.

2. Verfahren nach Anspruch 1, dadurch gekennzeichnet, daß man das System mit dem einbezogenen Festkörper beim Eintauchvorgang in die Flüssigkeit, z.B. Bad, in Schwingungen verschiedener Moden versetzt und die Änderung der Schwingung beim Eintauchvorgang über der Zeit erfaßt, wobei man kennzeichnende Werte für die Benetzungsfähigkeit des Festkörpers aus der Dämpfung der Schwingung und der Frequenzänderung während des Eintauch-bzw. Benetzungsvorgangs in Abhängigkeit von der Zeit ermittelt.

3. Verfahren nach Anspruch 1, dadurch gekennzeichnet, daß man den Prüfkörper nicht vollständig in die Flüssigkeit eintaucht, sondern im Ablauf der Schwingung lediglich in Berührung mit der Flüssigkeitsoberfläche kommen läßt.

4. Verfahren nach Anspruch 1, dadurch gekennzeichnet, daß man den Prüfkörper mit dem benetzenden Medium in Berührung bringt, während sich dieses noch im festen Zustand befindet, wobei beim Aufschmelzen des benetzenden Mediums die Veränderung der Dämpfung und/oder Frequenz des schwingenden Festkörpers durch die dann eintretende Benetzung gemessen wird.

5. Verfahren nach Anspruch 1, dadurch gekennzeichnet, daß man zusätzlich zur Veränderung der Schwingung des Prüfkörpers durch die Benetzung, die durch die Ankoppelung der Flüssigkeit übertragene Schwingungsenergie, d.h. die Schallübertragung, mißt.

6. Verfahren nach Anspruch 5, dadurch gekennzeichnet, daß man die allein durch die Benetzung und der damit gegebenen Ankopplungsgüte bedingte Schwingungsübertragung, z.B. Schallübertragung, mißt.

7. Verfahren nach Anspruch 1, dadurch gekennzeichnet, daß man Messungen nicht im ruhenden, sondern im strömenden Medium durchführt.

8. Verfahren nach Anspruch 1, dadurch gekennzeichnet, daß man während des Messvorgangs die Temperatur des flüssigen Mediums verändert.

9. Verfahren nach einem oder mehreren der Ansprüche 1 bis 8, dadurch gekennzeichnet, daß man den festen Prüfkörper nicht unmittelbar am Schwinger, sondern über eine geeignete, fest mit dem Schwinger verbundene Halterung, einer Klemmung, durch Unterdruck oder Magnet befestigt.

10. Verfahren nach einem oder mehreren der Ansprüche 1 bis 9, dadurch gekennzeichnet, daß man den Prüfkörper nicht senkrecht, sondern unter einem beliebigen Winkel in die Flüssigkeit, z.B Bad, eintaucht.

11. Verfahren nach Anspruch 1, dadurch gekennzeichnet, daß man mehrere Festkörper in einer Halterung so anbringt, daß diese gleichzeitig oder zeitlich versetzt in die benetzende Flüssigkeit eintauchen.

12. Verfahren nach Anspruch 1, dadurch gekennzeichnet, daß man die Schwingung, z.B. Schall, in die Flüssigkeit einleitet und die in Abhängigkeit von der Benetzung übertragene Energie am Festkörper mißt.

13. Verfahren nach Anspruch 1, dadurch gekennzeichnet, daß man die Schwingung, z.B. Schall, in den Festkörper einleitet in Abhängigkeit von der Benetzung übertragene Energie in der Flüssigkeit, z.B. Bad, mißt.

14. Verfahren nach Anspruch 1, dadurch gekennzeichnet, daß man für die eingeleitete Schwingung eine bestimmte Frequenz wählt, z. B. eine Resonanzfrequenz des Systems.

15. Verfahren nach Anspruch 1, dadurch gekennzeichnet, daß die Anregung der Schwingung mit durchgestimmten Frequenzen innerhalb eines beliebig breiten Frequenzbandes erfolgt.

16. Verfahren nach Anspruch 1, dadurch gekennzeichnet, daß man mit konstanter Amplitude anregt.

17. Verfahren nach Anspruch 1, dadurch gekennzeichnet, daß man mit veränderlicher Amplitude anregt.

18. Verfahren nach Anspruch 1, dadurch gekennzeichnet, daß man eine sinusförmige Schwingung zur Anregung verwendet.

19. Verfahren nach Anspruch 1, dadurch gekennzeichnet, daß man eine rechteckförmige, dreieckförmige oder anders geformte Schwingung zur Anregung verwendet.

## Claims

1. Process for the measurement of the wetting power between a liquid and a miniaturised solid body (third body), characterised in that one connects the solid body with an oscillating system and determines the changes of the oscillating behaviour in the case of the dipping of the solid body into the liquid in dependence upon the wetting power between the surface of the solid body and the liquid and that the change of the oscillating behaviour or of the transmission of the oscillating energy between solid body and liquid is used for the characterisation of the wetting power.

2. Process according to claim 1, characterised in that one places the system with the drawn-in solid body in the case of the dipping-in procedure into the liquid, e.g. bath, in oscillations of differing modes and detects the change of the oscillation in the case of the dipping-in procedure over the course of time, whereby one determines characterising values for the wettability of the solid body from the damping of the oscillation and of the frequency change during the dipping-in or wetting procedure depending upon the time.

3. Process according to claim 1, characterised in that one does not completely dip the test body into the liquid but rather, in the course of the oscillation, merely allows to come into contact with the liquid surface.

4. Process according to claim 1, characterised in that one brings the test body into contact with the wetting medium while this is still in solid state, whereby, in the case of melting of the wetting medium, the change of the damping and/or frequency of the oscillating solid body is measured by the then occurring wetting.

5. Process according to claim 1, characterised in that, in addition to the changing of the oscillation of the test body by the wetting, one measures the oscillation energy, i.e. the sound transmission, transmitted by the coupling of the liquid.

6. Process according to claim 5, characterised in that one measures the oscillation transmission, e.g. sound transmission, solely caused by the wetting and the coupling value given therewith.

7. Process according to claim 1, characterised in that one carries out measurements not in the stationary but rather in the flowing medium.

8. Process according to claim 1, characterised in that one changes the temperature of the liquid medium during the measurement procedure.

9. Process according to one or more of claims 1 to 8, characterised in that one fixes the solid test body not directly to the oscillator but rather via a suitable holding device firmly connected with the oscillator, a clamp, by underpressure or magnet.

10. Process according to one or more of claims 1 to 9, characterised in that one dips the test body into the liquid, e.g. bath, not vertically but rather at any arbitrary angle.

11. Process according to claim 1, characterised in that one so attaches several solid bodies in a holding device that these dip simultaneously or chronologically staggered into the wetting liquid.

12. Process according to claim 1, characterised in that one initiates the oscillation, e.g. sound, in the liquid and measures the energy on the solid body transmitted in dependence upon the wetting.

13. Process according to claim 1, characterised in that one initiates the oscillation, e.g. sound, in the solid body and measures the energy in the liquid, e.g. bath, transmitted in dependence upon the wetting.

14. Process according to claim 1, characterised in that one selects for the initiated oscillation a specific frequency, e.g. a resonance frequency of the system.

15. Process according to claim 1, characterised in that the activation of the oscillation takes place with variable frequencies with a frequency band of any desired breadth.

16. Process according to claim 1, characterised in that one activates with constant amplitude.

17. Process according to claim 1, characterised in that one activates with variable amplitude.

18. Process according to claim 1, characterised in that one uses a sinusoidal oscillation for the activation.

19. Process according to claim 1, characterised in that one uses a rectangular, triangular or other formed oscillation for the activation.

## Revendications

1. Procédé pour mesurer le pouvoir de mouillage entre un liquide et un corps solide miniaturisé (corps minuscule), caractérisé en ce qu'on relie le corps solide avec un système oscillant et on détermine les variations de comportement d'oscillations se produisant, lors d'une immersion du corps solide dans le liquide en fonction du pouvoir de mouillage entre la surface du corps solide et le liquide, et en ce que la variation du comportement d'oscillations ou la transmission de l'énergie d'oscillations entre le corps solide et le liquide sont utilisés pour caractériser le pouvoir de mouillage.

2. Procédé selon la revendication 1, caractérisé en ce qu'on soumet le système avec le corps solide correspondant, lors du processus d'immersion dans le liquide, par exemple un bain, à des oscillations de différents modes et on capte en fonction du temps la variation des oscillations dans le processus d'immersion, et en ce qu'on détermine en fonction du temps des valeurs caractérisant la capacité de mouillage du corps solide à partir de l'amortissement des oscillations et de la variation de fréquence pendant le processus d'immersion ou de mouillage.

3. Procédé selon la revendication 1, caractérisé en ce qu'on ne plonge pas le corps à contrôler complètement dans le liquide mais on le laisse simplement en contact avec la surface du liquide pendant le processus d'oscillation.

4. Procédé selon la revendication 1, caractérisé en ce qu'on met le corps à contrôler en contact avec l'agent mouillant, pendant que celui-ci se trouve encore à l'état solide et, lors de la fusion de l'agent mouillant, on mesure la variation de l'amortissement et/ou de la fréquence du corps solide en oscillations par le mouillage alors produit.

5. Procédé selon la revendication 1, caractérisé en ce que, en addition à la variation d'oscillations du corps à contrôler sous l'effet du mouillage, on mesure l'énergie d'oscillations transmise par la liaison avec le liquide, c'est-à-dire la transmission de sons.

6. Procédé selon la revendication 5, caractérisé en ce qu'on mesure la transmission d'oscillations, par exemple la transmission de sons, résultant uniquement du mouillage et de la qualité de liaison ainsi établie.

7. Procédé selon la revendication 1, caractérisé en ce qu'on effectue des mesures dans un agent qui n'est pas au repos mais qui est en écoulement.

8. Procédé selon la revendication 1, caractérisé en ce que, pendant le processus de mesure, on modifie la température de l'agent fluide.

9. Procédé selon une ou plusieurs des revendications 1 à 8, caractérisé en ce qu'on fixe le corps solide à contrôler non directement sur un dispositif oscillant mais par l'intermédiaire d'un support approprié, relié de façon fixe au dispositif oscillant, au moyen d'un serrage, d'une dépression ou d'un aimant.

10. Procédé selon une ou plusieurs des revendications 1 à 9, caractérisé en ce qu'on plonge le corps à contrôler dans le liquide, par exemple un bain, non à la verticale mais selon un angle quelconque.

11. Procédé selon la revendication 1, caractérisé en ce qu'on dispose plusieurs corps solides dans un support de telle sorte qu'ils soient plongés dans le liquide de mouillage simultanément ou avec un décalage temporel.

12. Procédé selon la revendication 1, caractérisé en ce qu'on introduit l'oscillation, par exemple un son, dans le liquide et on mesure sur le corps solide l'énergie transmise en fonction du mouillage.

13. Procédé selon la revendication 1, caractérisé en ce qu'on introduit l'oscillation, par exemple un son, dans le corps solide et on mesure dans le liquide, par exemple un bain, l'énergie transmise en fonction du mouillage.

14. Procédé selon la revendication 1, caractérisé en ce qu'on choisit pour l'oscillation introduite une fréquence déterminée, par exemple une fréquence de résonance du système.

15. Procédé selon la revendication 1, caractérisé en ce que l'excitation de l'oscillation est effectuée à des fréquences déterminées entrant dans une bande de fréquences d'une largeur quelconque.

16. Procédé selon la revendication 1, caractérisé en ce qu'on effectue l'excitation avec une amplitude constante.

17. Procédé selon la revendication 1, caractérisé en ce qu'on effectue l'excitation avec une amplitude variable.

18. Procédé selon la revendication 1, caractérisé en ce qu'on utilise pour l'excitation une oscillation de forme sinusoïdale.

19. Procédé selon la revendication 1, caractérisé en ce qu'on utilise pour l'excitation une oscillation de forme rectangulaire, de forme triangulaire ou d'une autre forme.
